# EUROPÄISCHE PATENTANMELDUNG

(11) **EP 2 662 737 A1**
(43) Veröffentlichungstag der Anmeldung: **13.11.2013**
(21) Anmeldenummer: 12167205.9
(22) Anmeldetag: 08.05.2012
(51) Int. Cl.: G05B 17/02

(54) **Simulationseinrichtung, Verfahren zum Betrieb einer Simulationseinrichtung sowie Verwendung einer Simulationseinrichtung und eines Verfahrens zum Betrieb einer Simulationseinrichtung**

(71) Anmelder: Prognost Systems GmbH, 48432 Rheine (DE)
(72) Erfinder: Koers, Christian, 48493 Wettringen (DE); Hörnschemeyer, Klaus, 49811 Lingen (DE)
(74) Vertreter: Werner & ten Brink

(57) **Zusammenfassung**

Die Erfindung betrifft eine Simulationseinrichtung (10), ein Verfahren zum Betrieb einer Simulationseinrichtung (10) sowie eine Verwendung einer Simulationseinrichtung (10) und eines Verfahrens zum Betrieb einer Simulationseinrichtung (10), wobei sich die Simulationseinrichtung (10) dadurch auszeichnet, dass mit einer durch eine umfangreiche Parametrierbarkeit erreichten hohen Flexibilität an zumindest einem Ausgangskanal (14) ein in seiner Phasenlage beeinflussbares Ausgangssignal (12) erzeugt werden kann, so dass mit der Simulationseinrichtung (10) eine Überwachungseinrichtung (74) geprüft werden kann, der ein oder mehrere derartige Ausgangssignale (12) anstelle normalerweise aus einem überwachten technischen Prozess (70) aufgenommener Messwerte zugeführt werden.

## Beschreibung

Die Erfindung betrifft eine Simulationseinrichtung zum Simulieren zumindest eines Sensors oder einer Mehrzahl von Sensoren. Die Erfindung betrifft im Weiteren ein Verfahren zum Betrieb einer solchen Simulationseinrichtung und zum Simulieren eines Sensors oder einer Mehrzahl von Sensoren. Schließlich betrifft die Erfindung auch die Verwendung einer solchen Simulationseinrichtung und die Verwendung eines Verfahrens zum Betrieb einer solchen Simulationseinrichtung.

Simulationseinrichtungen sind zum Beispiel in Form sogenannter Signalgeneratoren bekannt. Ein Signalgenerator kann zumindest sinusförmige Signale mit einer vorgegebenen Frequenz und einer vorgegebenen Amplitude erzeugen. Oft ist auch die Erzeugung anderer Signalformen, etwa eine Erzeugung von Rechtecksignalen oder Signalen in Form eines sogenannten Sägezahns und dergleichen möglich. Solche Signal- oder Funktionsgeneratoren, speziell auch in einer Ausführung als sogenannter Arbiträrgenerator, werden zur Entwicklung und Prüfung elektronischer Schaltungen verwendet. Die Simulation besteht dabei darin, dass mit dem Signalgenerator ein Signal erzeugt wird, das einem Signal entspricht, wie dies in der Praxis von der jeweiligen Schaltung, zum Beispiel einem Verstärker oder einem Filter, verarbeitet wird. Die Schaltung kann demnach bei Anlegen eines mit einem Signalgenerator erzeugten Eingangssignals unter realistischen Bedingungen oder zumindest annähernd realistischen Bedingungen geprüft werden und es lässt sich auf diese Weise sicherstellen, dass die Schaltung, der Verstärker, das Filter, usw. in der beabsichtigten Weise auf das Eingangssignal reagiert und ein erwartetes Ausgangssignal erzeugt.

Eine Aufgabe der vorliegenden Erfindung besteht ausgehend von diesem Stand der Technik darin, eine Simulationseinrichtung und ein Verfahren zum Betrieb einer Simulationseinrichtung anzugeben, die bzw. das für weitere Anwendungsfälle anwendbar ist.

Diese Aufgabe wird hinsichtlich der Simulationseinrichtung erfindungsgemäß mit den Merkmalen des Anspruchs 1 gelöst. Dazu ist bei einer Simulationseinrichtung zur Erzeugung einer Mehrzahl von Ausgangssignalen an einer Mehrzahl von Ausgangskanälen zur Simulation eines Sensors eines vorgebbaren Typs oder mehrerer Sensoren eines jeweils vorgegeben Typs Folgendes vorgesehen: Die Simulationseinrichtung umfasst einerseits ein oder mehrere Signalgenerierungsmittel und andererseits ein oder mehrere Signalbearbeitungsmittel. Das oder die Signalgenerierungsmittel ist bzw. sind zur Generierung zumindest eines Basissignals bestimmt und eingerichtet. Das oder die Signalbearbeitungsmittel ist bzw. sind zur Verarbeitung des vom dem oder jedem Signalgenerierungsmittel generierbaren Basissignals und zur Erzeugung zumindest eines Ausgangssignals bestimmt und eingerichtet. Für jeden Ausgangskanal ist dabei das darüber ausgebbare Ausgangssignal einzeln durch jeweils ein vom Signalgenerierungsmittel generierbares Basissignal bestimmbar und eine Phasenlage der vom Signalgenerierungsmittel generierbaren Basissignale beeinflussbar. Durch das oder jedes Signalbearbeitungsmittel ist das vom dem oder den Signalgenerierungsmitteln empfangbare Basissignal in ein Ausgangssignal umwandelbar und zwar in ein Ausgangssignal in Form einer physikalischen Größe, also zum Beispiel Strom oder Spannung, wie dies ein physikalischer Sensor generieren würde. Dies bedeutet, dass die Simulationseinrichtung an ihrem mindestens einen Ausgangskanal als Ausgangssignal zum Beispiel Spannungswerte zwischen 0 Volt und 10 Volt oder Spannungswerte zwischen -5 Volt und +5 Volt oder einen Strom im Bereich von 0 oder 4 Milliampere bis 20 Milliampere und so weiter ausgibt. Die Simulationseinrichtung kann damit unmittelbar einen jeweils simulierten Sensor ersetzen.

Die Erfindung geht von der Erkenntnis aus, dass für eine Vielzahl automatisch betriebener technischer Prozesse, speziell sicherheitskritischer technischer Prozesse, heute ein Funktionstest, eine Zertifizierung oder dergleichen erforderlich ist. Solche technischen Prozesse zum Umformen oder Transportieren von Material, Energie oder Information etc. und deren automatische Steuerung und/oder Überwachung werden im Folgenden kurz als Automatisierungslösung bezeichnet. Ein derartiger Funktionstest kann bis zu einer Abnahme einer Zertifizierungsstelle reichen und damit einer Zertifizierung, umfasst aber auch Abnahmen oder Garantien, wie sie zum Beispiel Lieferanten einer Automatisierungslösung oder Lieferanten von Teilen oder Funktionseinheiten einer Automatisierungslösung beibringen müssen, um gegenüber dem jeweiligen Betreiber der Automatisierungslösung die grundsätzliche Tauglichkeit der einzelnen Komponenten, Aggregate und Funktionseinheiten sowie deren Tauglichkeit in unterschiedlichen Betriebssituationen dokumentieren zu können.

Der Vorteil der Erfindung besteht darin, dass die mitunter auch als Sensorsimulator bezeichnete Simulationseinrichtung an einer im Betrieb befindlichen Automatisierungslösung, zum Beispiel einem Kolbenkompressor, oder allgemein Verdichtern, Pumpen und Turbinen oder dergleichen, der bzw. dem zur Überwachung von deren bzw. dessen Betrieb zumindest ein Sensor, üblicherweise eine Mehrzahl von unterschiedlichen Sensoren, zugeordnet ist, an die Stelle eines oder mehrerer Sensoren treten kann, damit eine für die Automatisierungslösung vorgesehene Überwachungseinrichtung unter möglichst praxisnahen Bedingungen getestet werden kann. Eine solche Überwachungseinrichtung ist normalerweise beim Betrieb der Maschine oder Automatisierungslösung aktiv. Dann werden über eine der Automatisierungslösung zugeordnete Sensorik, also zumindest einen Sensor oder eine Mehrzahl von Sensoren, Zustände der Automatisierungslösung erfasst, zum Beispiel Temperaturmesswerte von einem oder mehreren Temperatursensoren, Druckmesswerte von einem oder mehreren Drucksensoren, Positionsmesswerte von einem oder mehreren Absolut- oder Inkrementalgebern, Geschwindigkeitsmesswerte von einem oder mehreren Geschwindigkeitsmessern, Beschleunigungsmesswerte von einem oder mehreren Beschleunigungssensoren, Schwingungsmesswerte von einem oder mehreren Schwingungssensoren und so weiter. Anhand der erfassten Zustände kann in grundsätzlich an sich bekannter Art und Weise eine Überwachung der Automatisierungslösung erfolgen. Zum Beispiel kann eine Überschreitung eines vorgegebenen oder vorgebbaren Grenzwerts durch einen Messwert eine Ausnahmesituation, zum Beispiel einen Fehler, anzeigen und eine in der Überwachungseinrichtung angelegte Behandlung der Ausnahmesituation auslösen. Eine einfache Möglichkeit zur Behandlung einer Ausnahmesituation besteht im Abschalten einzelner oder mehrerer Aggregate der Automatisierungslösung. Zur Behandlung einer Ausnahmesituation können jedoch auch durchaus komplexere Vorgänge angestoßen werden, mit denen die Automatisierungslösung zum Beispiel in einen sicheren Zustand überführt wird. Wenn im Weiteren beispielhaft von einem Kolbenkompressor als technischem Prozess gesprochen wird, steht dies stellvertretend für Verdichter, Pumpen und Turbinen allgemeiner Art und Gruppen solcher Aggregate und ist dementsprechend nicht einschränkend auszulegen.

Die Simulationseinrichtung ist dafür bestimmt und eingerichtet, solche Messwerte zu erzeugen. Die Simulationseinrichtung tritt dafür an die Stelle eines oder mehrerer Sensoren der jeweiligen Automatisierungslösung. An die Stelle eines jeweiligen Sensors tritt die Simulationseinrichtung, indem eine zuvor an dessen Ausgang zur Übermittlung des Ausgangssignals des Sensors an eine nachgeordnete Einheit, also zum Beispiel die Überwachungseinrichtung, angeschlossene Signalleitung an einen Ausgangskanal der Überwachungseinrichtung angeschlossen wird. Die Verwendung der Simulationseinrichtung in einer Automatisierungslösung beschränkt sich also im Wesentlichen darauf, dass die von den zu simulierenden Sensoren abgehenden Signalleitungen an jeweils einen Ausgangskanal der Simulationseinrichtung angeschlossen werden. Die Automatisierungslösung selbst, die Überwachungseinrichtung und die Einbindung der Überwachungseinrichtung in die Automatisierungslösung bleiben dabei unverändert. Die Verwendung der Simulationseinrichtung ist also schnell und vergleichsweise unkompliziert. Sobald die Simulationseinrichtung aktiviert wird, empfängt die Überwachungseinrichtung Signale, von denen zumindest einige scheinbar aus der Automatisierungslösung, tatsächlich aber von der Simulationseinrichtung kommen. Für die Überwachungseinrichtung ist die Verwendung der Simulationseinrichtung nicht erkennbar und mit der Simulationseinrichtung können spezielle Zustände der Automatisierungslösung und Zustandskombinationen der Automatisierungslösung simuliert werden, um die Überwachungseinrichtung und deren Reaktion auf solche Zustände und Zustandskombinationen zu testen und/oder zu dokumentieren.

Indem eine Phasenlage der vom Signalgenerierungsmittel generierbaren Basissignale beeinflussbar ist, lässt sich auch die Phasenlage der von der Simulationseinrichtung generierten Ausgangssignale festlegen. Auf diese Weise können mit der Simulationseinrichtung auch spezielle Situationen simuliert werden, die für eine Überwachungseinrichtung der Automatisierungslösung an einer Gleichzeitigkeit oder einer speziellen zeitlichen Korrelation der von der jeweiligen Sensorik der Automatisierungslösung oder - im Falle einer Simulation - der Simulationseinrichtung ausgegebenen bzw. generierten/simulierten Sensorsignale erkennbar sind oder anhand einer solchen zeitlichen Korrelation erkannt werden müssen.

Insgesamt lässt sich damit eine Simulationseinrichtung wie hier und im Folgenden beschrieben sowie ein Verfahren zu deren Betrieb zum Testen eines Überwachungssystems und speziell auch bei Situationen einsetzen, bei denen ein Funktionstest oder eine Zertifizierung der oben genannten Art auch für Überwachungssysteme und dergleichen gefordert ist. Solche Überwachungssysteme müssen bei Ausnahmesituationen der jeweiligen Automatisierungslösung entsprechende Reaktionen, zum Beispiel das Abschalten einzelner Aggregate oder zumindest eine Überführung in einen sicheren Zustand, gewährleisten. Verständlicherweise lassen sich solche Ausnahmesituationen, wie zum Beispiel extreme Überlastsituationen, Verschleißerscheinungen oder besondere Belastungen bei einem in Resonanz angeregten System und dergleichen, nicht ohne Weiteres, zumindest nicht ohne eine Gefahr von Beschädigungen einzelner Komponenten oder Aggregate der Automatisierungslösung herbeiführen. Ein Beispiel ist eine Erfassung einer Beschleunigung in einem technischen Prozess, zum Beispiel an einem Kolbenkompressor. Kritische Beschleunigungen, also Beschleunigungen, die bereits eine Ausnahme- oder Fehlersituation darstellen, lassen sich wegen der Gefahr von Beschädigungen direkt durch den technischen Prozess normalerweise nicht erzeugen. Selbst wenn man noch annehmen wollte, dass es vertretbar wäre, den jeweiligen technischen Prozess zumindest kurzfristig so zu betreiben, dass sich erhöhte Beschleunigungswerte und damit Beschleunigungssignale ergeben, um damit eine Reaktion der Überwachungseinrichtung auf solche Beschleunigungssignale testen zu können, muss man sich vor Augen führen, dass leistungsfähige Überwachungseinrichtungen normalerweise nicht bereits auf das kurzzeitige Überschreiten einzelner Grenzwerte ansprechen, sondern zum Beispiel erst auf das mehrfache oder für einen vorgegebenen Zeitraum andauernde Überschreiten solcher Grenzwerte. Dies lässt sich durch einen entsprechenden Betrieb des jeweiligen technischen Prozesses oftmals nicht mehr realisieren. Eine Überprüfung der Funktion der Überwachungseinrichtung durch einen speziellen Betrieb des technischen Prozesses lässt sich allerdings spätestens dann nicht mehr realisieren, wenn die Überwachungseinrichtung auch eine zeitliche Korrelation von Schwell- und Grenzwertüberschreitungen in Bezug auf andere Prozessgrößen, etwa eine Winkellage einer Kurbelwelle, überwacht. Solche Prozesszustände, die auf spezielle Ausnahmesituationen, etwa einen Lagerverschleiß oder dergleichen, hinweisen, lassen sich durch einen noch ordnungsgemäß funktionierenden technischen Prozess auch durch einen Betrieb mit zum Beispiel erhöhten Beschleunigungswerten nicht erreichen, so dass entsprechend eine Überprüfung der Überwachungseinrichtung in Bezug auf eine korrekte Erkennung und Behandlung solcher Ausnahmesituationen nicht möglich ist. Mit der Simulationseinrichtung lassen sich aber Signale generieren, die solchen Situationen entsprechen.

Indem die Simulationseinrichtung Ausgangssignale in Form einer physikalischen Größe erzeugt, also zum Beispiel als Strom oder Spannung, und zwar in einer Form, wie dies ein physikalischer Sensor generieren würde, kann die Simulationseinrichtung in der jeweiligen Automatisierungslösung an die Stelle eines oder mehrerer Sensoren treten und anstelle tatsächlicher, von den Sensoren erzeugter Signale spezielle Signale generieren, die zum Testen der Automatisierungslösung und der jeweiligen Überwachungseinrichtung geeignet sind. Innerhalb der Automatisierungslösung ist abgesehen von dem kurzfristigen Ersetzen der realen Sensoren durch die Simulationseinrichtung keine Änderung erforderlich, so dass der Test nicht nur die Überwachungseinrichtung, sondern auch alle den Sensoren nachfolgenden Einheiten erfasst, also Signalpfade, eventuelle Signalwandler, Abschaltpfade und dergleichen.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Bei einer Ausführungsform der Simulationseinrichtung mit einer Mehrzahl von Ausgangskanälen ist vorgesehen, dass für zumindest einen Ausgangskanal, optional für eine Mehrzahl von Ausgangskanälen oder jeden Ausgangskanal, die Art der Umwandlung des vom Signalgenerierungsmittel empfangbaren Basissignals in ein Ausgangssignal auswählbar ist. Die Simulationseinrichtung ist damit sehr universell einsetzbar und weitgehend oder vollständig an die in der jeweiligen Automatisierungslösung vorhandene Sensorik anpassbar. Wenn die Automatisierungslösung zum Beispiel einen Sensor, der als Sensorsignal ein Signal im Bereich von 0 Volt bis 10 Volt ausgibt, und einen weiteren Sensor, der als Sensorsignal ein Signal im Bereich von 4 mA bis 20 mA ausgibt, umfasst, kann eine Simulationseinrichtung, die an ihren Ausgangskanälen normalerweise Signale im Bereich von 0 Volt bis 10 Volt generiert und von denen zumindest einer durch eine entsprechende Auswahl hinsichtlich der Art der Umwandlung des vom Signalgenerierungsmittel empfangbaren Basissignals in ein Ausgangssignal parametrierbar ist, für diese Automatisierungslösung verwendet werden, indem der mindestens eine parametrierbare Ausgangskanal entsprechend parametriert wird. Nach einer solchen Parametrierung ist die Simulationseinrichtung in der Lage, an einem Ausgangskanal ein Ausgangssignal im Bereich von 0 Volt bis 10 Volt und an einem anderen Ausgangskanal ein Signal im Bereich von 4 mA bis 20 mA auszugeben. Die Simulationseinrichtung kann damit unmittelbar während der Simulationsphase an die Stelle der von der Automatisierungslösung umfassten Sensorik treten. Selbstverständlich ist dieses Beispiel für besondere Ausführungsformen der Simulationseinrichtung und eine entsprechende Parametrierbarkeit mehrerer oder aller Ausgangskanäle beliebig erweiterbar. Je umfassender die Simulationseinrichtung hinsichtlich der Art der Umwandlung des vom Signalgenerierungsmittel empfangbaren Basissignals in ein Ausgangssignal parametrierbar ist, desto besser ist die Simulationseinrichtung bei Automatisierungslösungen mit einer umfangreichen Sensorik verwendbar.

Bei einer weiteren Ausführungsform der Simulationseinrichtung mit einer Mehrzahl von Ausgangskanälen ist vorgesehen, dass intern in der Simulationseinrichtung jedem Ausgangskanal ein Signalbearbeitungsmittel zugeordnet ist und dass zumindest eines der Signalbearbeitungsmittel zur Auswahl der Art der Umwandlung des vom Signalgenerierungsmittel empfangbaren Basissignals in ein Ausgangssignal parametrierbar ist. Als Signalbearbeitungsmittel kommt zum Beispiel eine Schaltung in Betracht, die als Eingangssignal das vom Signalgenerierungsmittel empfangbare Basissignal verarbeitet und in ein der jeweiligen Parametrierung entsprechendes Ausgangssignal umwandelt. Die Parametrierung stellt dabei im einfachsten Fall eine Umschaltung des oder der Signalbearbeitungsmittel dar, derart, dass je nach Parametrierung unterschiedliche Funktionseinheiten aktiviert werden. Bei einem Ausgangskanal, der zum Erzeugen eines Ausgangssignals entweder in einer Art, wie dies ein Sensor eines ersten Typs oder einer Art, wie dies ein Sensor eines zweiten Typs oder einer Art, wie dies ein Sensor eines dritten Typs generieren würde, bestimmt und eingerichtet ist, weist das für diesen Ausgangskanal vorgesehene Signalbearbeitungsmittel drei der jeweils zu simulierenden Sensorik entsprechende Funktionseinheiten auf. Die Wirkung der Parametrierung des jeweiligen Ausgangskanals besteht dann darin, dass in Abhängigkeit von der jeweiligen Parametrierung eine dieser Funktionseinheiten in einen im Signalbearbeitungsmittel gebildeten Wirkpfad von der Aufnahme des Basissignals an einem Eingang bis zur Ausgabe des jeweiligen Ausgangssignals am Ausgang geschaltet wird. Dies hat vorteilhaft zur Folge, dass je nach jeweils entsprechend der Parametrierung aktivierter Funktionseinheit das Signalbearbeitungsmittel und damit die Simulationseinrichtung selbst zum Beispiel auch eine für den zu simulierenden realen Sensor vorgesehene Speisespannung aufnehmen kann und dergleichen.

Bei einer besonderen Ausführungsform der Simulationseinrichtung ist ein Triggerausgang vorgesehen. Ein Triggerausgang und ein darüber ausgebbares Triggersignal ist sinnvoll, wenn es darum geht, eine zeitliche Korrelation von Messwerten, also auch simulierten Messwerten, und Zuständen des technischen Prozesses darzustellen. Bei einem Kolbenkompressor ist es zum Beispiel üblich, einzelne Messwerte in Relation zu einer Lage der Kurbelwelle zu betrachten. Wenn die Simulationseinrichtung die Sensorik des jeweiligen technischen Prozesses ganz oder teilweise ersetzt, steht ein Messwert zur Winkelposition der Kurbelwelle normalerweise nicht mehr zur Verfügung. Die Simulationseinrichtung erzeugt ein solches Signal selbst und gibt dieses als Triggersignal an die nachgeordnete Überwachungseinrichtung weiter. Das Triggersignal kann dann von der Überwachungseinrichtung zum Beispiel hinsichtlich der Position der Kurbelwelle als Nulllageinformation ausgewertet werden, so dass einzelne oder alle von der Simulationseinrichtung erzeugten Ausgangssignale in Ansehung einer solchen Positionsinformation und einer damit festgelegten Zeitbasis ausgewertet werden können. Darüber hinaus können über einen solchen Triggerausgang oder einen zusätzlichen Triggerausgang zum Beispiel mehrere Simulationseinrichtungen der hier beschriebenen Art, bei denen eine Anzahl der Ausgangskanäle notwendig durch die dafür erforderliche Anschlussphysik, nämlich insbesondere Kontaktstellen, begrenzt ist, synchronisiert werden, wenn es zum Beispiel darum geht, eine Simulation für eine Automatisierungslösung mit einer besonders umfangreichen Sensorik durchzuführen.

Bei einer Ausführungsform der hier beschriebenen Simulationseinrichtung ist das Signalgenerierungsmittel zumindest zur Beeinflussung des jeweils als Grundlage für das oder jedes Ausgangssignal generierbaren Basissignals parametrierbar. Auf diese Weise können unterschiedlichste Signalformen als Basissignal oder für eine Mehrzahl von Basissignalen vorgegeben werden. Als Signalformen kommen zumindest eine Sinusform, eine Rechteckform, eine Dreieckform, eine Sägezahnform und/oder eine Trapezform sowie arithmetische und logische Kombinationen davon in Betracht. Ein Beispiel für eine arithmetische Kombination einzelner Signalformen ist ein Sinussignal mit einer Grundfrequenz, das mit einer Mehrzahl von Sinussignalen mit jeweils einer zur Grundfrequenz harmonischen Frequenz durch Addition oder Subtraktion kombiniert wird. Ein Beispiel für eine logische Kombination einzelner Signalformen ist zum Beispiel die oben beschriebene arithmetische Kombination mehrerer Sinussignale, die mit den Pegeln eines Rechtecksignals einer UND-Verknüpfung unterworfen wird, so dass die Kombination der Sinussignale nur während eines bestimmten Pegels des Rechtecksignals erscheint. Üblicherweise - allerdings nicht notwendig - ist die Parametrierbarkeit des Signalgenerierungsmittels oder der Signalgenerierungsmittel, bei dem bzw. bei denen es sich zum Beispiel um eine Verarbeitungseinheit in Form von oder nach Art eines Mikroprozessors oder digitalen Signalprozessors (DSP) handelt, mit einer Parametrierbarkeit zumindest eines Signalbearbeitungsmittels kombiniert. Dies erlaubt eine breite Anwendbarkeit der Simulationseinrichtung.

Wenn die Simulationseinrichtung eine Eingangsschnittstelle zum Anschluss eines im Folgenden als Bediengerät bezeichneten Geräts zur Parametrierung des Signalgenerierungsmittels und/oder des Signalbearbeitungsmittels aufweist, lässt sich mit dem Bediengerät eine komfortable sogenannte Benutzerschnittstelle (HMI; Mensch-Maschine-Schnittstelle) realisieren. Eine solche Benutzerschnittstelle erfordert üblicherweise Ein- und Ausgabemittel, also zum Beispiel Tasten und dergleichen als Eingabemittel und eine Anzeigeeinrichtung in Form eines Bildschirms oder dergleichen, die im Falle eines an die Eingangsschnittstelle der Simulationseinrichtung anschließbaren Bediengeräts nicht von der Simulationseinrichtung selbst umfasst sein müssen. Die Simulationseinrichtung kann damit klein und kompakt ausgeführt sein. Bei einer besonderen Ausführungsform der Simulationseinrichtung kommt eine allseitige Kapselung in einem Gehäuse, zum Beispiel einem Gehäuse, das eine spezielle Schutzart, zum Beispiel IP65, realisiert, in Betracht. Die Simulationseinrichtung ist damit auch für sogenannte raue Umgebungen verwendbar, wie sie sich üblicherweise im Zusammenhang mit dem Betrieb von Automatisierungslösungen ergeben, nämlich Umgebungen mit erhöhter Luftfeuchtigkeit oder Spritz- oder Strahlwasser, Umgebungen mit erhöhter Staubbildung, Umgebungen mit erhöhter mechanischer Rüttel- oder Schockbelastung und so weiter. Die Parametrierung der Simulationseinrichtung kann dabei am Anbringungsort der Simulationseinrichtung erfolgen, so dass das Bediengerät nur kurze Zeit in der jeweiligen rauen Umgebung verwendet werden muss. Die Parametrierung der Simulationseinrichtung kann auch entfernt vom Anbringungsort der Simulationseinrichtung erfolgen, so dass das Bediengerät gar nicht in der jeweiligen rauen Umgebung verwendet werden muss und die Simulationseinrichtung nach Abschluss der Parametrierung zum Anbringungsort verbracht wird.

Hinsichtlich eines solchen Bediengeräts für eine Simulationseinrichtung ist vorgesehen, dass dieses eine Benutzeroberfläche zur Parametrierung des vom Signalgenerierungsmittel der Simulationseinrichtung generierbaren Basissignals oder der vom Signalgenerierungsmittel der Simulationseinrichtung generierbaren Basissignale umfasst. Eine solche Benutzeroberfläche kann mit einer Mehrzahl von Bedienelementen realisiert sein, zum Beispiel einem Bedienelement zur Auswahl eines zu parametrierenden Basissignals, dann einem Bedienelement zur Auswahl einer Signalgrundform für das ausgewählte Basissignal und sodann einem Bedienelement zur Auswahl einer Frequenz und/oder Amplitude der als Basissignal ausgewählten Signalgrundform. Als Bedienelement kommt dabei zum Beispiel ein Wahlschalter oder ein sogenannter DIP-Schalter in Betracht. Speziell zur Vorgabe einer Frequenz oder Amplitude oder sonstiger numerischer Parameter kommen sogenannte Potentiometer in Betracht. Wenn das Bediengerät zusätzlich oder alternativ eine Benutzeroberfläche zur Parametrierung der Art der Umwandlung des oder der vom Signalgenerierungsmittel empfangbaren Basissignals bzw. Basissignale in ein Ausgangssignal für zumindest einen Ausgangskanal umfasst, ist auch eine solche Parametrierung leicht und unkompliziert möglich. Wenn das Bediengerät in dieser Hinsicht keine Parametrierung erlaubt, muss die Simulationseinrichtung entsprechende Bedienelemente, zum Beispiel ein Schaltelement oder dergleichen, aufweisen. Solche Bedienelemente sind grundsätzlich anfällig für Fehlfunktionen und mechanische Beschädigungen, so dass die Verlagerung einer solchen Parametrierbarkeit zum Bediengerät im Hinblick auf eine Ausfallsicherheit und eine weitgehende oder vollständige Wartungsfreiheit der Simulationseinrichtung vorteilhaft ist. Auch zur Parametrierung der Art der Umwandlung eines Basissignals in ein Ausgangssignal kommen Wahlschalter, DIP-Schalter und dergleichen in Betracht.

Bei einer besonderen Ausführungsform des Bediengeräts ist vorgesehen, dass dieses eine Anzeigevorrichtung in Form von oder nach Art eines Bildschirms zur graphischen Darstellung der Benutzeroberfläche und zur graphischen Darstellung des oder der entsprechend der Parametrierung vom Signalgenerierungsmittel generierten Basissignals bzw. Basissignale aufweist. Mit einer solchen Anzeigevorrichtung ist die Benutzeroberfläche als graphische Benutzeroberfläche oder graphische Benutzerschnittstelle (GUI) - im Folgenden zusammenfassend als Benutzeroberfläche bezeichnet - realisierbar. Dies erlaubt eine außerordentlich flexible und detailreiche Darstellung der jeweils vorgenommenen oder vorgesehenen Parametrierung. So ist zum Beispiel eine graphische Darstellung des aufgrund einer jeweiligen Parametrierung resultierenden Basissignals möglich. Des Weiteren ist eine einfache Anpassung einer Frequenz und/oder einer Amplitude des jeweiligen Basissignals oder einzelner oder mehrerer zur Bildung des Basissignals ausgewählter Signalformen möglich. Solche Parameter können entweder numerisch eingegeben oder mit Hilfe sogenannter Schieberegler verstellt werden. Außerdem kann mit Hilfe einer graphischen Benutzeroberfläche eine Phasenlage einzelner Basissignale zueinander leicht und genau vorgegeben werden, zum Beispiel indem die Phasenlage numerisch eingegeben oder mit Hilfe eines Schiebereglers verstellt wird. Die resultierende zeitliche Korrelation der betroffenen Basissignale kann unmittelbar zu Kontrollzwecken mittels der Anzeigeeinrichtung dargestellt werden. Schließlich kann auch ein Basissignal, das zum Beispiel aus mehreren Harmonischen eines Sinussignals zusammengesetzt ist, auf die oben skizzierte Art und Weise genau parametriert und das Ergebnis der Parametrierung angezeigt werden. Eine graphische Benutzeroberfläche ist zwar aufwendiger zu realisieren, so dass auch eine mit Wahlschaltern und dergleichen realisierte Benutzeroberfläche Vorteile, insbesondere Kostenvorteile, aufweist. Der Vorteil einer graphischen Benutzeroberfläche liegt darin, dass Benutzer technischer Geräte an solche Oberflächen gewöhnt sind. Zudem kann der Umfang der Benutzeroberfläche leicht angepasst werden, ohne dafür die konstruktive Ausführungsform des Bediengeräts ändern zu müssen.

Sowohl die Simulationseinrichtung wie auch das Bediengerät können einen Speicher umfassen, in dem Daten für eine vorgenommene Parametrierung abrufbar ablegbar sind. Eine solche Speicherung von im Rahmen einer Parametrierung festgelegten Daten kann sich auf einzelne Ausgangskanäle, also Parameter zur Spezifikation des jeweiligen Basissignals und Parameter zur Spezifikation der Art des Ausgangssignals, wie auch auf sämtliche Ausgangskanäle beziehen. Wenn aus dem Speicher ein eine vollständige Parametrierung eines Ausgangskanals darstellender Datensatz abrufbar ist, kann damit eine Parametrierung eines ersten Ausgangskanals leicht als Basis für eine Parametrierung eines weiteren Ausgangskanals übernommen werden. Wenn aus dem Speicher ein eine vollständige Parametrierung aller Ausgangskanäle darstellender Datensatz abrufbar ist, kann eine für eine konkrete Automatisierungslösung erfolgte Parametrierung leicht bei einer anderen gleichartigen oder ähnlichen Automatisierungslösung wieder verwendet werden. Zudem kann mit einem solchen Datensatz eine Simulation der Automatisierungslösung zu einem späteren Zeitpunkt wiederholt werden. Schließlich können ein oder mehrere Datensätze der oben genannten Art in Bezug auf einen Ausgangskanal oder in Bezug auf eine Mehrzahl von Ausgangskanälen auch nach Art einer Vorlage zur Verfügung gestellt werden, so dass ein Verwender der Simulationseinrichtung und/oder des Bediengeräts auf Basis solcher Vorlagen mit wenigen Schritten zu einer verwendbaren Parametrierung der Simulationseinrichtung kommt.

Die Erfindung ist zumindest teilweise in Software oder in Form von Soft- und Firmware implementiert. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch eine Vorrichtung, also eine Simulationseinrichtung oder ein Bediengerät, in deren bzw. dessen Speicher als Mittel zur Durchführung des Verfahrens und seiner Ausgestaltungen ein solches Computerprogramm geladen
oder ladbar ist.

Das zur Verwendung mit der Simulationseinrichtung vorgesehene Bediengerät bildet zusammen mit der Simulationseinrichtung ein die Simulationseinrichtung und das Bediengerät umfassendes System. Die Erfindung bezieht sich damit sowohl auf die einzelnen Komponenten eines solchen Systems, nämlich die Simulationseinrichtung einerseits und das Bediengerät andererseits, wie auch auf ein beide Komponenten umfassendes System.

Darüber hinaus betrifft die Erfindung auch ein Verfahren zum Betrieb einer Simulationseinrichtung wie hier und im Folgenden beschrieben. Bei einem solchen Verfahren zum Betrieb einer Simulationseinrichtung ergeben sich zumindest die folgenden Verfahrensschritte: Eine mehrere Ausgangskanäle umfassende Simulationseinrichtung erzeugt zur Simulation jeweils eines Sensors eines vorgebbaren Typs an jeweils einem Ausgangskanal zumindest ein Ausgangssignal. Dafür umfasst die Simulationseinrichtung einerseits Signalgenerierungsmittel zum Generieren eines oder mehrerer Basissignale und andererseits Signalbearbeitungsmittel zum Verarbeiten eines vom dem oder jedem Signalgenerierungsmittel generierten Basissignals und zum Erzeugen zumindest eines Ausgangssignals. Für jeden Ausgangskanal wird dabei das darüber ausgegebene Ausgangssignal einzeln durch jeweils ein vom Signalgenerierungsmittel generiertes Basissignal bestimmt. Des Weiteren wird eine Phasenlage der vom Signalgenerierungsmittel generierten Basissignale vorgegeben. Das oder jedes Signalbearbeitungsmittel wandelt dann das vom Signalgenerierungsmittel empfangene Basissignal in ein Ausgangssignal in Form einer physikalischen Größe um, wie dies ein physikalischer Sensor generieren würde. Die Ausführung des Verfahrens erlaubt demnach die Nutzung der Simulationseinrichtung anstelle einzelner oder mehrerer Sensoren einer Automatisierungslösung, um die Automatisierungslösung oder eine von der Automatisierungslösung umfasste oder der Automatisierungslösung zugeordnete Überwachungseinrichtung wie oben beschrieben zu testen.

Bei einer Ausführungsform des Verfahrens zum Betrieb einer Simulationseinrichtung mit einer Mehrzahl von Ausgangskanälen, wobei jedem Ausgangskanal ein Signalbearbeitungsmittel zugeordnet ist, wird zumindest eines der Signalbearbeitungsmittel zur Auswahl der Art der Umwandlung des vom Signalgenerierungsmittel empfangenen Basissignals in ein Ausgangssignal parametriert. Eine solche Parametrierung eines oder mehrerer Signalbearbeitungsmittel und damit der jeweiligen Ausgangskanäle erlaubt eine Anpassung der Simulationseinrichtung an die von der jeweiligen Automatisierungslösung umfasste Sensorik wie oben beschrieben.

Bei einer Ausführungsform des Verfahrens ist zum Betrieb einer Simulationseinrichtung in Kombination mit einem Bediengerät wie hier und nachfolgend beschrieben vorgesehen, dass mittels einer Benutzeroberfläche des Bediengeräts eine Parametrierung des oder der vom Signalgenerierungsmittel der Simulationseinrichtung generierten Basissignals bzw. Basissignale erfolgt. Damit ist wie oben bereits beschrieben zum Beispiel eine Auswahl von Signalgrundformen und/oder eine Vorgabe einer Frequenz und/oder Amplitude der jeweils ausgewählten Signalgrundform möglich. Bei einer Auswahl von Signalgrundformen ist die Auswahl einer oder mehrerer Grundformen möglich, so dass sich das jeweilige Basissignal auch als logische oder arithmetische Kombination solcher Signalgrundformen ergeben kann. Bei einer Mehrzahl von generierten Basissignalen umfasst die mittels der Benutzeroberfläche des Bediengeräts erfolgende Parametrierung der vom Signalgenerierungsmittel der Simulationseinrichtung generierten Basissignale auch eine Festlegung von deren Phasenlage.

Bei einer besonderen Ausführungsform des Verfahrens zum Betrieb einer Simulationseinrichtung in Kombination mit einem Bediengerät wird mittels der Benutzeroberfläche eine Parametrierung der Art der Umwandlung des oder der vom Signalgenerierungsmittel empfangenen Basissignals bzw. Basissignale in ein Ausgangssignal für zumindest einen Ausgangskanal vorgenommen.

Jede derartige Parametrierung erlaubt die Verwendung eines im Hinblick auf eine leichte und übersichtliche Bedienung optimierten Bediengeräts, so dass an der Simulationseinrichtung keine ansonsten zur Parametrierung benötigten Bedienelemente erforderlich sind oder dass solche von der Simulationseinrichtung gegebenenfalls umfasste Bedienelemente nicht verwendet werden müssen. Eine zur Parametrierung der Simulationseinrichtung oder einzelner Funktionseinheiten der Simulationseinrichtung mit dem Bediengerät realisierte Benutzeroberfläche kann mit entsprechenden Schaltelementen in Hardware oder als graphische Benutzeroberfläche in Software ausgeführt sein. Speziell eine graphische Benutzeroberfläche erlaubt zum Beispiel eine graphische Darstellung einzelner oder mehrerer Basis- und/oder Ausgangssignale, so dass sich für einen Verwender des Bediengeräts ein ausgesprochen hoher Nutzungskomfort ergibt.

Insgesamt betrifft die Erfindung damit auch eine Verwendung einer Simulationseinrichtung wie hier und nachfolgend beschrieben sowie eine Verwendung eines Verfahrens zum Betrieb der Simulationseinrichtung wie hier und nachfolgend beschrieben zum Funktionstest und/oder zur Zertifizierung einer ansonsten auch kurz als Überwachungseinrichtung bezeichneten Einrichtung zur Überwachung eines technischen Prozesses, insbesondere einer Automatisierungslösung wie oben definiert. Die Begriffe Funktionstest bzw. Zertifizierung meinen dabei jede Form der Prüfung eines Verhaltens der Überwachungseinrichtung im Hinblick auf ein erwartetes oder erforderliches Verhalten. Das Verhalten der Überwachungseinrichtung ist dabei zum Beispiel eine Reaktion auf eine Ausnahmesituation der Automatisierungslösung, wobei das Vorliegen einer solchen Ausnahmesituation durch das von der Simulationseinrichtung entsprechend der jeweiligen Parametrierung erzeugte Ausgangssignal bzw. durch die von der Simulationseinrichtung entsprechend der jeweiligen Parametrierung erzeugten Ausgangssignale suggeriert wird.

Eine solche Verwendung einer Simulationseinrichtung kommt speziell zum Funktionstest und/oder zur Zertifizierung einer Einrichtung zur Überwachung eines Kolbenkompressors oder einer Einrichtung zur gleichzeitigen Überwachung einer Mehrzahl von Kolbenkompressoren in Betracht. Ein Betrieb eines Kolbenkompressors oder mehrerer Kolbenkompressoren ist eine komplexe Automatisierungslösung mit sich im Betrieb ergebenden hohen mechanischen Kräften, Drücken und Temperaturen. Eine qualifizierte Überwachung einer solchen Automatisierungslösung ist damit für deren sicheren und effizienten Betrieb essentiell. Hinsichtlich einer Effizienzsicherung und gegebenenfalls sogar -steigerung kann die Überwachungseinrichtung zum Beispiel Verschleißerscheinungen erkennen und darauf basierend eine Ausfallwahrscheinlichkeit oder einen Ausfallzeitpunkt prognostizieren. Notwendige Wartungsmaßnahmen können damit rechtzeitig eingeplant werden. Hinsichtlich einer Absicherung des Betriebs der Automatisierungslösung kann die Überwachungseinrichtung Ausnahmesituationen, zum Beispiel Grenzwertüberschreitungen, erkennen und geeignete Gegenmaßnahmen einleiten. Alle diese Funktionen können in einer entsprechenden Überwachungseinrichtung angelegt sein. Mit der Simulationseinrichtung und im Rahmen einer Verwendung der Simulationseinrichtung zum Funktionstest und/oder zur Zertifizierung der Überwachungseinrichtung kann getestet werden, ob die in der Überwachungseinrichtung angelegten Funktionen korrekt ausgeführt werden.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung auch Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Prüf- und Arbeitsverfahren betreffen.

Es zeigen
- FIG 1: eine Simulationseinrichtung,
- FIG 2: ein Detail der Simulationseinrichtung,
- FIG 3: ein System mit einer Simulationseinrichtung wie in FIG 1 und einem zur Bedienung und Parametrierung der Simulationseinrichtung vorgesehenen Bediengerät,
- FIG 4: eine graphische Benutzeroberfläche, wie sie zur Bedienung und Parametrierung der Simulationseinrichtung durch das Bediengerät darstellbar ist,
- FIG 5: eine Vorschaufunktion der Benutzeroberfläche zur graphischen Darstellung einzelner oder mehrerer mit der Simulationseinrichtung ausgebbarer Ausgangssignale und/oder einzelner oder mehrerer den Ausgangssignalen zugrunde liegender Basissignale,
- FIG 6: eine Anwendung der Simulationseinrichtung und
- FIG 7: eine Darstellung zur Veranschaulichung einer segmentspezifischen Überwachung eines Messwertes.

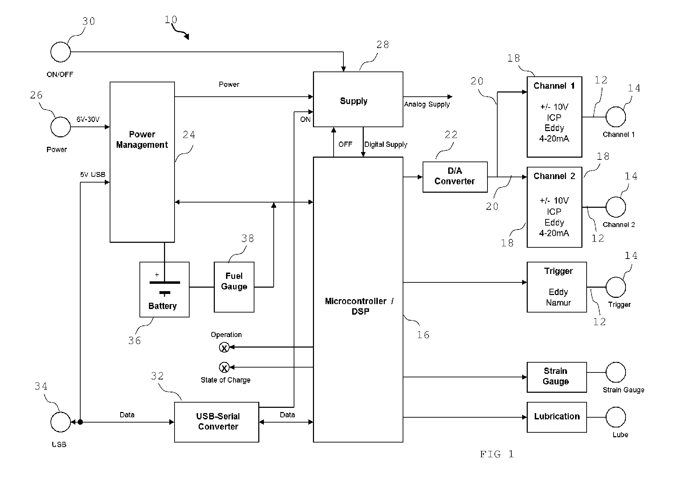

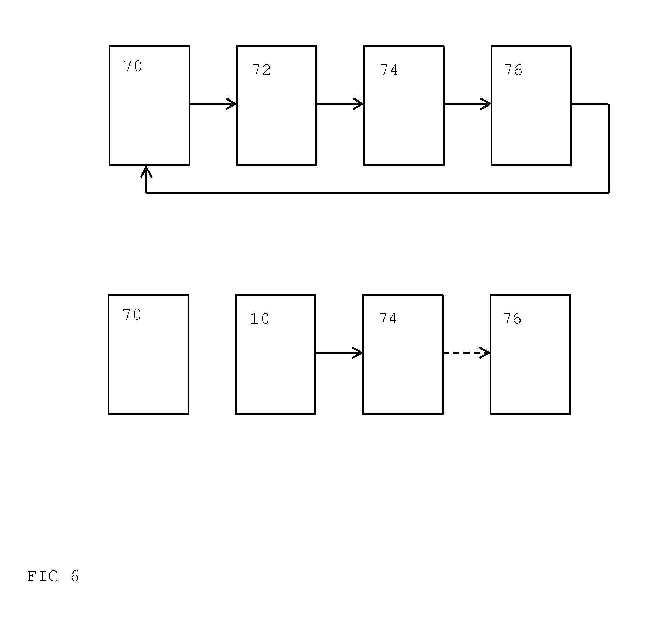

FIG 1 zeigt eine schematisch vereinfachte Darstellung eines Blockschaltbilds einer Simulationseinrichtung 10 zur Erzeugung von zumindest einem Ausgangssignal 12 an zumindest einem Ausgangskanal 14 zur Simulation eines Sensors eines vorgebbaren Typs. Dafür umfasst die Simulationseinrichtung 10 ein oder mehrere Signalgenerierungsmittel 16 und ein oder mehrere Signalbearbeitungsmittel 18. Als Signalgenerierungsmittel 16 fungiert im in FIG 1 gezeigten Ausführungsbeispiel ein Microcontroller. Der Microcontroller als Signalgenerierungsmittel 16 ist zur Generierung zumindest eines Basissignals 20 vorgesehen. Das Basissignal 20 wird dabei nach Ausgabe durch das Signalgenerierungsmittel 16 mit einem Digital/Analog-Konverter 22 (D/A-Converter) in ein Analogsignal umgewandelt. Grundsätzlich könnte eine solche Digital/Analog-Wandlung auch am Ausgang sämtlicher Signalbearbeitungsmittel 18 erfolgen. Bei einer Mehrzahl von Ausgangskanälen 14 generiert das Signalgenerierungsmittel 16 eine entsprechende Mehrzahl von Basissignalen 20. Dafür kann eine entsprechende Mehrzahl von Signalpfaden zum Digital/Analog-Konverter 22 vorgesehen sein. Alternativ ist die Übermittlung mehrerer Basissignale 20 zum Digital/Analog-Konverter 22 auch in einem Zeitmultiplexverfahren möglich, so dass erst der Digital/Analog-Konverter 22 eine Verteilung der Basissignale 20 an die jeweiligen Signalbearbeitungsmittel 18 vornimmt. Als Basissignal 20 werden dabei sowohl ein vom Signalgenerierungsmittel 16 generiertes Digitalsignal wie auch ein auf dieser Basis vom Digital/Analog-Konverter 22 in ein Analogsignal gewandeltes Signal verstanden. Auch wenn in der Zeichnung die zum Anschluss einer Signalleitung vorgesehene Kontaktstelle als Ausgangskanal 14 bezeichnet ist, kann auch eine Kombination des jeweiligen Signalbearbeitungsmittels 18 mit der nachfolgenden Kontaktstelle als Ausgangskanal 14 aufgefasst werden. Ein spezieller Ausgangskanal 14 ist ein Triggerausgang und ein über diesen ausgebbares Ausgangssignal 12 ist entsprechend ein Triggersignal. Auch zur Erzeugung eines jeweiligen Triggersignals ist ein Signalbearbeitungsmittel 18 vorgesehen, das grundsätzlich die gleiche Funktionalität aufweist, wie das oder die Signalbearbeitungsmittel 18 der anderen Ausgangskanäle 14. Ein von einer Simulationseinrichtung 10 ausgegebenes Triggersignal wird von einer nachgeordneten Einheit (vgl. FIG 6) zur Überprüfung einzelner oder mehrerer Ausgangssignale 12 in Bezug auf eine zeitliche Korrelation zu bestimmten Prozesszuständen, etwa einer Kurbelwellenlage, ausgewertet. Ein von einer Simulationseinrichtung 10 ausgegebenes Triggersignal kann von einer anderen Simulationseinrichtung 10 auch zu Synchronisationszwecken als Eingangssignal verarbeitet werden. Insoweit fungiert der hier als Ausgangskanal 14 bezeichnete Triggerausgang in einem Verbund mehrerer Simulationseinrichtungen 10, von denen die das Triggersignal ausgebende Simulationseinrichtung 10 als Master und jede weitere Simulationseinrichtung 10 als Slave fungiert, mitunter auch als Eingangskanal und damit als Triggereingang.

Eingangsseitig weist die Simulationseinrichtung 10 eine Spannungsversorgungseinheit 24 (Power-Management) auf, der über einen Spannungsversorgungseingang 26 eine Versorgungsspannung zuführbar ist. Die Spannungsversorgungseinheit 24 leitet eine zum Betrieb des Signalgenerierungsmittels 16 und zum Betrieb der Signalbearbeitungsmittel 18 vorgesehene Betriebsspannung mittelbar über eine Schalteinrichtung 28 an diese Einheiten weiter. Auf die Schalteinrichtung 28 wirken ein Ein/Aus-Schalter 30, das Signalgenerierungsmittel 16 und eine Schnittstelleneinheit 32. Der Ein/Aus-Schalter 30 und die Schnittstelleneinheit 32 können die Schalteinrichtung 28 aktivieren, so dass das Signalgenerierungsmittel 16 und die Signalbearbeitungsmittel 18 mit Betriebsspannung versorgt werden. Das Signalgenerierungsmittel 16 kann die Schalteinrichtung 28 deaktivieren, so dass das Signalgenerierungsmittel 16 und die Signalbearbeitungsmittel 18 bis zur nächsten Aktivierung der Schalteinrichtung 28 abgeschaltet sind.

Die Schnittstelleneinheit 32 ist zwischen eine Eingangsschnittstelle 34, die in der dargestellten Ausführungsform als USB-Schnittstelle gezeigt ist, und das Signalgenerierungsmittel 16 geschaltet, so dass auf diesem Wege dem hier als Signalgenerierungsmittel 16 fungierenden Microcontroller Daten, zum Beispiel Parametrierungsdaten, eingeprägt werden können. Solche Daten beeinflussen zum Beispiel die Art des jeweils erzeugten Basissignals 20, insbesondere im Hinblick auf eine dafür verwendete Grundform, eine Amplitude und/oder eine Frequenz. Des Weiteren können über die Eingangsschnittstelle 34 und die Schnittstelleneinheit 32 auch Daten aus dem hier als Signalgenerierungsmittel 16 fungierenden Microcontroller gelesen werden, um zum Beispiel Daten einer bestehenden Parametrierung für eine spätere Verwendung auf einem externen Gerät zu speichern.

Optional weist die Simulationseinrichtung 10 einen Akkumulator 36 (Battery) oder dergleichen auf, der bei einer Wegnahme oder einem Ausfall der am Versorgungsspannungseingang 26 anliegenden Versorgungsspannung den weiteren Betrieb der Simulationseinrichtung 10 gewährleistet oder zumindest kurzzeitig gewährleistet. Dafür wird der Wert der von der Spannungsversorgungseinheit 24 gelieferten Betriebsspannung überwacht. Bei einer ausreichenden Betriebsspannung wird ein Teil derselben zum Laden des Akkumulators 36 verwendet. Eine Betriebsspannungsüberwachung 38 versorgt den zuvorderst als Signalgenerierungsmittel 16 fungierenden Microcontroller, der aber auch noch weitere Funktionen erfüllt, mit einer Information zur Betriebsspannung und ermöglicht Aktionen in Ansehung der Betriebsspannung.

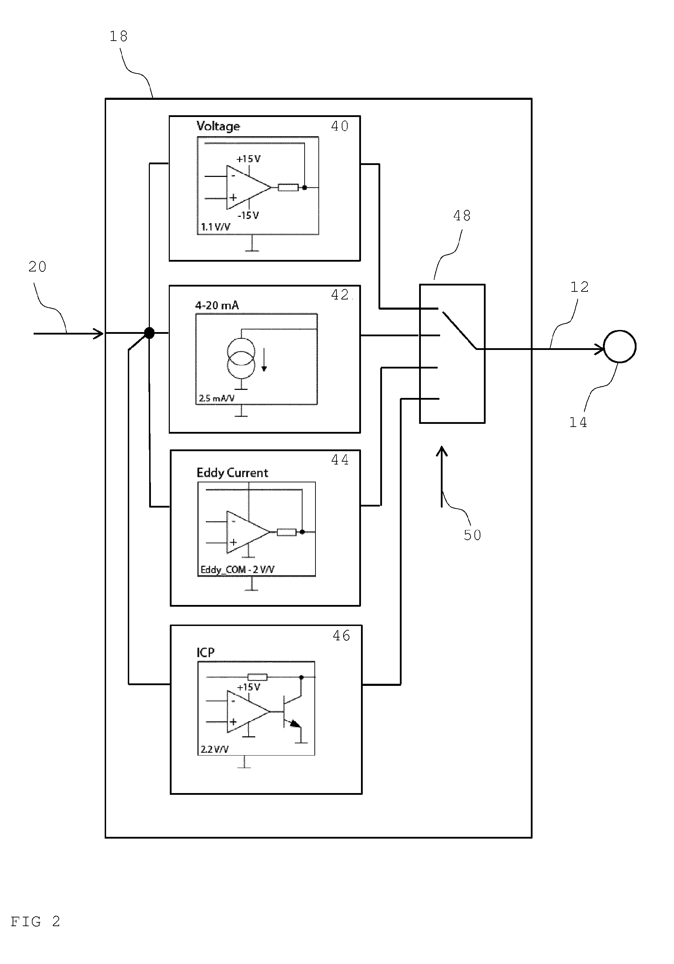

FIG 2 zeigt eine Darstellung eines als Kombination eines Signalbearbeitungsmittels 18 und einer nachfolgenden Anschlussstelle aufgefassten Ausgangskanals 14 mit weiteren Details. Danach umfasst das Signalbearbeitungsmittel 18 ein oder mehrere Funktionseinheiten 40, 42, 44, 46. Eine Funktionalität der jeweiligen Funktionseinheit 40-46 bestimmt die Art der Umwandlung des vom Signalbearbeitungsmittel 18 empfangenen Basissignals 20 in ein Ausgangssignal 12 wie dies ein physikalischer Sensor generieren würde. Bei den hier dargestellten vier Funktionseinheiten 40-46 kann zum Beispiel eine erste Funktionseinheit 40 zur Umwandlung des Basissignals 20 in ein Ausgangssignal 12, wie dies ein +/- 10V Sensor generieren würde, und eine zweite Funktionseinheit 42 zur Umwandlung des Basissignals 20 in ein Ausgangssignal 12, wie dies ein 4-20mA Sensor generieren würde, eine dritte Funktionseinheit 44 zur Umwandlung des Basissignals 20 in ein Ausgangssignal 12, wie dies sogenannter Eddy-Current-Sensor generieren würde, und schließlich eine vierte Funktionseinheit 46 zur Umwandlung des Basissignals 20 in ein Ausgangssignal 12, wie dies ein sogenannter ICP-Sensor generieren würde, vorgesehen sein. Ein Signalbearbeitungsmittel 18 der Simulationseinrichtung 10 kann mehr oder weniger als die vier dargestellten Funktionseinheiten 40-46 aufweisen.

Als Funktionseinheiten 40-46 kommt jeweils eine Funktionseinheit 40-46 zur Simulation folgender Sensortypen in Betracht, wobei Simulation meint, dass die Funktionseinheit 40-46 zur Umwandlung eines an ihrem Eingang anstehenden Signals in ein Signal, wie dies ein entsprechender Sensor generieren würde, wirksam ist: alle auf einer Widerstandsmessung basierenden Sensoren, induktive Sensoren, kapazitive Sensoren, piezoelektrische Sensoren, ICP-Sensoren (IEPE-Sensoren), Sensoren zur Ausgabe eines Stromsignals nach DIN IEC 60381-1, Sensoren mit Stromschnittstelle (4-20mA Schnittstelle oder 0-20mA Schnittstelle), Sensoren zur Ausgabe eines Spannungssignals nach DIN IEC 60381-2 (0V-10V, -/+5V, -/+10V, 2V-10V), Wirbelstromsensoren (Eddy-Current), und so weiter. Auf diese Weise ist mit der Simulationseinrichtung 10 schaltbar eine Mehrzahl von Sensortypen simulierbar. Es sei darauf hingewiesen, dass FIG 2 den jeweiligen Signalpfad nur schematisch vereinfacht zeigt. Für die einzelnen Funktionseinheiten 40-46 sind exemplarisch jeweils einzelne Grundschaltungen gezeigt, mit denen die Umwandlung des jeweils ankommenden Basissignals in ein Signal, wie dies ein jeweils entsprechender Sensor abgeben würde, möglich ist. Dem Fachmann ist geläufig, wie eine solche Grundschaltung oder gegebenenfalls eine solche Grundschaltung mit funktionalen Ergänzungen, zum Beispiel Sicherungsmaßnahmen, mit einer entsprechenden Eingangs- und Ausgangsversorgung geeignet in einen solchen Signalpfad integriert werden kann.

Mindestens eines der Signalbearbeitungsmittel 18 der Simulationseinrichtung 10 weist zumindest zwei schaltbar auswählbare Funktionseinheiten 40-46 auf. Einzelne Signalbearbeitungsmittel 18 der Simulationseinrichtung können gleiche Funktionseinheiten 40-46 aufweisen, so dass zum Beispiel über mehrere Ausgangskanäle 14 ein Ausgangssignal 12 ausgebbar ist, wie dies ein +/-10V-Sensor generieren würde. Die Art und Anzahl der Funktionseinheiten 40-42 kann bei allen Signalbearbeitungsmitteln 18 unterschiedlich sein. Zur schaltbaren Auswahl jeweils genau einer Funktionseinheit 40-46 ist ein Selektionsschaltelement 48, also zum Beispiel in Form eines Wahlschalters oder eines sogenannten Multiplexers, vorgesehen. Bei einem manuell betätigbaren Wahlschalter bildet dieser
oder, bei einer entsprechenden Parametrierbarkeit einer Mehrzahl von Ausgangskanälen 14, bilden diese eine Benutzeroberfläche oder einen Teil einer Benutzeroberfläche der Simulationseinrichtung 10. Bei einem elektronisch ansteuerbaren Selektionsschaltelement 48, also einem solchen Schaltelement in Form eines Multiplexers oder dergleichen, wird dieses mit einem Auswahlsignal 50 angesteuert, um jeweils eine konkrete Schaltstellung zu bewirken. Das Auswahlsignal 50 ist dabei durch eine Parametrierung der Simulationseinrichtung 10, nämlich eine sich auf eine Parametrierung einzelner Signalbearbeitungsmittel 18 beziehende Parametrierung, beeinflussbar. Eine solche Parametrierung erfolgt zum Beispiel über die Eingangsschnittstelle 34 und darüber an die Simulationseinrichtung 10 übermittelte Daten.

Jede Art von Selektionsschaltelement 48 führt dazu, dass aus einer Mehrzahl von Funktionseinheiten 40-46 des Signalbearbeitungsmittels 18 genau eine Funktionseinheit 40-46 in einen Signalpfad vom Eingang des Signalbearbeitungsmittels 18, an dem dem Signalbearbeitungsmittel 18 das Basissignal 20 zugeführt wird, bis zum Ausgang, an dem das Signalbearbeitungsmittel 18 das Ausgangssignal 12 ausgibt, geschaltet wird. Innerhalb eines jeden Signalbearbeitungsmittels 18 mit einer Mehrzahl von Funktionseinheiten 40-46 ist dabei entsprechend der jeweiligen Schaltstellung des Selektionsschaltelements 48 genau eine Funktionseinheit 40-46 aktiv und die anderen Funktionseinheiten 40-46 sind ohne Wirkung oder es sind alle Funktionseinheiten 40-46 aktiv und alle Funktionseinheiten 40-46 bis auf eine Funktionseinheit 40-46 sind ohne Wirkung, weil nur diese eine Funktionseinheit auf den Ausgang des Signalbearbeitungsmittels 18 geschaltet wird. Je nach Ausführung der Funktionseinheiten 40-46 kann auch am Eingang der Funktionseinheiten 40-46 ein hier nur ausgangsseitig gezeigtes Selektionsschaltelement 48 vorgesehen oder erforderlich sein.

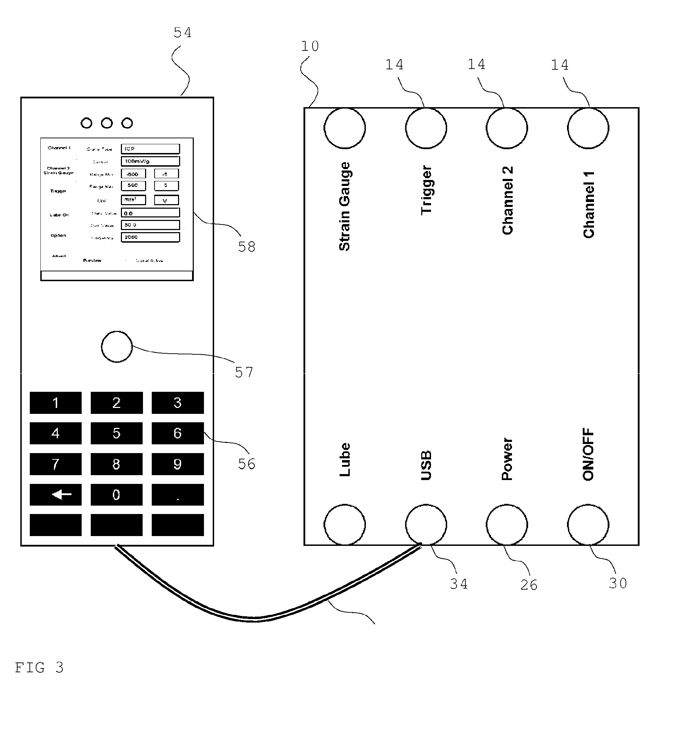

FIG 3 zeigt den Sensorsimulator 10 in einem Gehäuse. Das Gehäuse kapselt die Elektronik des Sensorsimulators 10 gegen Berührung und gegen Umwelteinflüsse. Auf der in der Darstellung in FIG 3 sichtbaren Seitenfläche des Gehäuses befinden sich der Ein/Aus Schalter 30, der Versorgungsspannungseingang 26 und die Eingangsschnittstelle 34. Die Anschlussstellen für die Ausgangskanäle 14 sind zum Beispiel auf der gegenüberliegenden und bei der hier gewählten Perspektive nicht sichtbaren Seitenfläche gebildet. An die Eingangsschnittstelle 34 ist mit einem Verbindungskabel 52 ein Bediengerät 54 angeschlossen. Mit dem Verbindungskabel 52 ist eine kommunikative Verbindung zwischen der Simulationseinrichtung 10 und dem Bediengerät 54 geschaffen. Grundsätzlich kann die kommunikative Verbindung auch auf leitungslosem Wege erfolgen.

Das Bediengerät 54 ermöglich eine Parametrierung der Simulationseinrichtung 10, insbesondere eine Parametrierung im Hinblick auf einzelne oder mehrere von dessen Signalgenerierungsmittel 16 zu generierenden Basissignale 20 und/oder im Hinblick auf eine Art der Umwandlung eines Basissignals 20 in ein Ausgangssignal 12 durch einzelne oder mehrere Signalbearbeitungsmittel 18. Dafür umfasst das Bediengerät 54 Eingabe- und/oder Anzeigemittel 56, 57, 58, hier also Tasten 56, einen Trackball 57 und einen Bildschirm 58. Über die Eingabe- oder Anzeigemittel 56-58 kann eine Parametrierung der Simulationseinrichtung 10 vorgenommen werden. Über das Anzeigemittel 58 kann die vorgenommene Parametrierung überprüft werden. Die Eingabe-und/oder Anzeigemittel 56-58 fungieren als Benutzeroberfläche zur Parametrierung der Simulationseinrichtung 10.

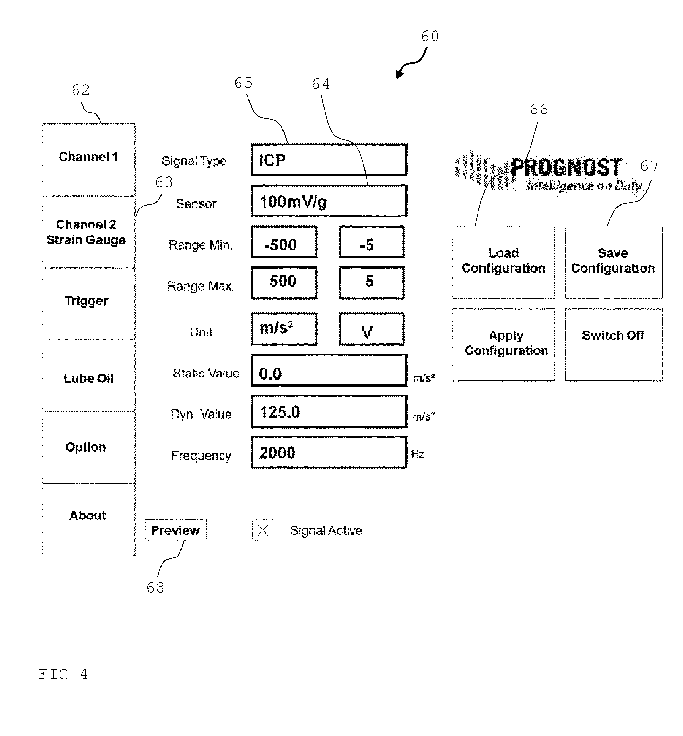

FIG 4 zeigt eine mögliche Ausführungsform einer graphischen Benutzeroberfläche 60 für eine Bedienung und Parametrierung der Simulationseinrichtung 10 und wiederholt insofern die in FIG 3 bereits teilweise sichtbare Darstellung auf dem als Anzeigemittel 58 fungierenden dortigen Bildschirm. Die Benutzeroberfläche 60 umfasst Schaltflächen 62, 63 zur Auswahl jeweils eines Ausgangskanals 14 zu dessen Parametrierung. Dabei kann ein zu simulierender Sensor nach Sensorart und Signaltyp 64, 65 ausgewählt werden. Diese Auswahl/Parametrierung beeinflusst zum Beispiel das Auswahlsignal 50 zur Ansteuerung des Selektionsschaltelements 48 (FIG 2) zur Auswahl einer der Signaltyp 65 entsprechenden Funktionseinheit 40-46 (FIG 2). Ein über den so parametrierten Ausgangskanal 14 auszugebendes Ausgangssignal 12 wird innerhalb der Simulationseinrichtung 10 aus einem dafür vom Signalgenerierungsmittel 16 der Simulationseinrichtung 10 generierten Basissignal 20 erzeugt. Das Basissignal 20 kann ebenfalls über die Benutzeroberfläche 60 parametriert werden. Gezeigt ist hier, dass eine Frequenz (Frequency) des jeweiligen Ausgangs- oder Basissignals 12, 20 sowie Minimal- und Maximalwerte (Range Min.; Range Max.) vorgegeben werden. Dabei bedeuten die in der Darstellung in FIG 4 gezeigten Zahlenwerte, dass der Wertebereich des Ausgangssignals 12 oder des zugrunde liegenden Basissignals 20 auf ein Intervall von -500 und 500 beschränkt wird und dass der Extremwert -500 einer Ausgangssignalspannung von -5.00 Volt und der Extremwert 500 einer Ausgangssignalspannung von 5.00 Volt entspricht. Das eigentliche Ausgangs- oder Basissignal 12, 20 wird neben der Frequenz (Frequency) durch einen statischen und einen dynamischen Wert (Static Value; Dyn. Value) bestimmt. Der dynamische Wert (Dyn. Value) bestimmt die Amplitude des Signals und mit dem statischen Wert (Static Value) kann eine Verschiebung des Signals in y-Richtung vorgegeben werden.

Eine vorgenommene Parametrierung kann für eine spätere Verwendung abgespeichert werden und durch Laden einer solchen abgespeicherten Parametrierung wieder aufgerufen werden. Dafür umfasst die Benutzeroberfläche 60 entsprechende Auswahlfelder 66,67, die in der Darstellung mit "Load Configuration" und "Save Configuration" beschriftet sind. Die dargestellte Benutzeroberfläche 60 umfasst auch ein hier mit "Preview" beschriftetes Umschaltfeld 68 zum Aufruf einer Vorschaufunktion.

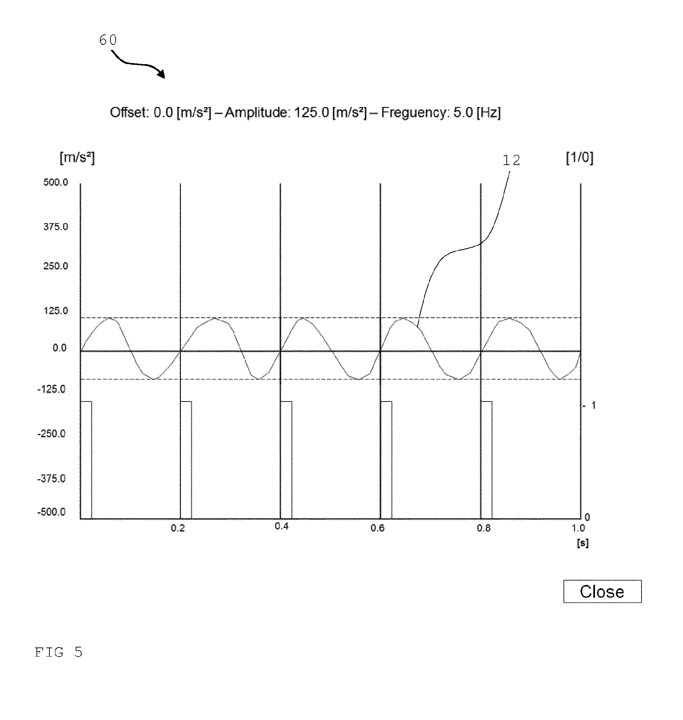

Ein mögliches Ergebnis einer solchen Vorschaufunktion ist in FIG 5 gezeigt. Gezeigt sind dabei zwei Graphen, nämlich einerseits ein sinusförmiger Graph und andererseits ein Graph in Form eines Rechtecksignals. Der sinusförmige Graph ist zum Beispiel eine Darstellung eines aufgrund einer entsprechenden Parametrierung resultierenden Basissignals 20 oder eine Darstellung eines aufgrund eines solchen Basissignals 20 resultierenden Ausgangssignals 12. In der Darstellung ist der sinusförmige Graph ohne Verzicht auf eine weitergehende Allgemeingültigkeit als Ausgangssignal 12 bezeichnet. Das Rechtecksignal ist zum Beispiel ein an einem Triggerausgang 14 ausgebbares Triggersignal 12. Das Triggersignal 12 kann zur Festlegung der Phasenlage des Basissignals 20 oder der Basissignale 20 und damit auch des oder jedes jeweils resultierenden Ausgangssignals 12 verwendet werden. Genauso kann eine Phasenlage eines Basissignals 20 in Bezug auf eine Phasenlage eines anderen Basissignals 20 durch eine entsprechende Parametrierung vorgegeben werden. Insgesamt ist jede Darstellung der entsprechend der jeweiligen Parametrierung resultierenden Signale ein Teilaspekt der Benutzeroberfläche 60 des Bediengeräts 54.

FIG 6 zeigt schematisch vereinfacht anhand eines Blockschaltbilds eine Anwendungssituation einer Simulationseinrichtung 10 wie hier beschrieben. Die Darstellung in FIG 6 zeigt im oberen Bereich von links nach rechts einen technischen Prozess 70, mit zum Beispiel einem Kolbenkompressor oder einer Mehrzahl von Kolbenkompressoren, eine dem technischen Prozess 70 jeweils zugeordnete Sensorik 72, um Signale aus dem technischen Prozess 70 für dessen Steuerung und/oder Überwachung aufzunehmen, eine Überwachungseinrichtung 74 zur Auswertung und/oder Verarbeitung solcher Signale und abschließend eine von der Überwachungseinrichtung 74 beeinflussbare Aktorik 76, mittels derer auf den technischen Prozess 70 durch Aktivierung oder Deaktivierung einzelner oder mehrerer davon umfasster Aggregate durch Anpassung von Temperaturen, Drücken, Positionen, Geschwindigkeiten und dafür jeweils gegebenenfalls vorgesehener Grenz- oder Schwellwerte Einfluss genommen werden kann. Die Überwachungseinrichtung 74 kann dabei eine Sicherheitssteuerung zur sicherheitsgerichteten oder fehlertoleranten Verarbeitung der von der Überwachungseinrichtung 74 generierten Steuersignale umfassen. Eine solche Sicherheitssteuerung kann sich auch als selbständige Einheit zwischen der Überwachungseinrichtung 74 und der Aktorik 76 befinden.

Zum Funktionstest und/oder zur Zertifizierung der Überwachungseinrichtung 74 tritt die Simulationseinrichtung 10 an die Stelle der Sensorik 72 oder zumindest an die Stelle einzelner Sensoren der Sensorik 72, wie dies im unteren Bereich der Darstellung in FIG 6 gezeigt ist. Die Rückwirkung der Aktorik 76 auf den technischen Prozess 70 ist dabei normalerweise deaktiviert, kann aber gleichwohl zumindest teilweise aktiv bleiben, wenn der technische Prozess 70 während des Funktionstests oder der Zertifizierung der Überwachungseinrichtung 74 selbst zumindest teilweise aktiv bleiben muss. Dargestellt ist eine Situation, bei der keine Rückwirkung der aus der Simulationseinrichtung 10, der Überwachungseinrichtung 74 und der Aktorik 76 gebildeten Strecke auf den technischen Prozess 70 vorgesehen ist. Eine solche Rückwirkung kann auch unterbunden werden, indem die Weiterleitung von Steuersignalen der Überwachungseinrichtung 74 für die Aktorik 76 an die jeweiligen Aktoren unterbunden wird. Eine in dieser Hinsicht einfache Möglichkeit besteht darin, ein oder mehrere Schaltelemente, insbesondere Relais, der Überwachungseinrichtung 74 zu überbrücken oder einzelne oder alle an Ausgangskanälen der Sicherheitssteuerung angeschlossene Stecker zu ziehen. Jedenfalls ist für die Überwachungseinrichtung 74 die Tatsache, dass bisher vom technischen Prozess 70 stammende Messwerte nicht mehr vom technischen Prozess 70 stammen, sondern von der Simulationseinrichtung 10 simuliert werden (Ausgangssignale 12 der Simulationseinrichtung 10), nicht erkennbar. Die

Überwachungseinrichtung 74 reagiert damit auf die von der Simulationseinrichtung 10 durch entsprechende Ausgangssignale 12 simulierten Zustände des technischen Prozesses 70 entsprechend einem in der Überwachungseinrichtung 74 ausgeführten Computerprogramm. Die Überwachungseinrichtung 74 und deren Computerprogramm und damit die Automatisierungslösung insgesamt kann auf diese Weise eingehend geprüft werden und es kann sichergestellt werden, dass die Überwachungseinrichtung 74 auf bestimmte Zustände oder Zustandsverläufe des technischen Prozesses 70, speziell auf Ausnahmesituationen des technischen Prozesses 70, bestimmungsgemäß reagiert. Wenn alle relevanten oder denkbaren Zustände und/oder Ausnahmesituationen des technischen Prozesses 70 mit der Simulationseinrichtung 10 simuliert wurden und die Überwachungseinrichtung 74 jeweils bestimmungsgemäß reagiert, ist die Funktion der Überwachungseinrichtung 74 geprüft oder die Überwachungseinrichtung 74 "zertifiziert", zumindest derart zertifiziert, dass ein Anbieter oder Betreiber der Überwachungseinrichtung 74 oder ein Betreiber der Automatisierungslösung die bestimmungsgemäße Reaktion der Überwachungseinrichtung 74 dokumentieren kann.

Die Funktion der Simulationseinrichtung10 kann bei besonderen Ausführungsformen noch erheblich erweitert sein. Die Beeinflussung der Phasenlage des oder der von dem oder den Signalbearbeitungsmitteln 18 erzeugten Ausgangssignals 12 bzw. Ausgangssignale 12 oder eines zugrunde liegenden Basissignals 20 bzw. jeweils zugrunde liegender Basissignale 20 kann sich auf ein Triggersignal oder ein anderes Ausgangs-oder Basissignal 12, 20 beziehen. Ein oder mehrere Ausgangssignale 12 und das oder jedes jeweils zugrunde liegende Basissignal 20 können jedoch auch segmentiert sein, so dass eine Phasenlage jedes Segments - zum Beispiel in Relation zum Triggersignal 12 - beeinflussbar ist.

Der Aspekt der Segmentierung soll an einem Beispiel verdeutlicht werden: Bei einem technischen Prozess in Form eines Kolbenkompressors oder dergleichen, sieht eine Automatisierungslösung für einen solchen technischen Prozess üblicherweise eine Überwachung zumindest einzelner Messwerte und dafür erzeugter Ausgangssignale 12 in Ansehung bestimmter Prozesszustände, hier also zum Beispiel bestimmter Winkellagen einer Kurbelwelle vor. Eine Kurbelwelle führt jeweils zyklisch vollständige Umdrehungen aus, so dass als ein Zyklus des technischen Prozesses eine Umdrehung der Kurbelwelle aufgefasst werden kann. Ein solcher Zyklus lässt sich segmentieren und eine Vollumdrehung von 0° bis 360° kann zum Beispiel in sechsunddreißig Segmente von jeweils zehn Grad unterteilt sein. Eine solche Unterteilung ermöglicht zum Beispiel die Erkennung von Lagerschäden oder dergleichen, wenn ein bestimmter Messwert wiederholt oder ständig in einem bestimmten Segment einen Schwell- oder Grenzwert überschreitet. Eine Simulation zum Beispiel eines Lagerschadens erfordert demnach eine Erhöhung eines Messwerts und eines dafür erzeugten Ausgangssignals 12 zumindest in einem bestimmten Segment und einem dadurch auch festgelegten Zeitabschnitt. Die Generierung von einem oder mehreren Basissignalen 20 und daraus die Erzeugung eines oder mehrerer Ausgangssignale 12 meint also auch eine Generierung/Erzeugung solcher segmentierter Signale 12, 20 und die Beeinflussung der Phasenlage in jedem Segment in Relation zu einer Bezugsgröße, also zum Beispiel dem Triggersignal.

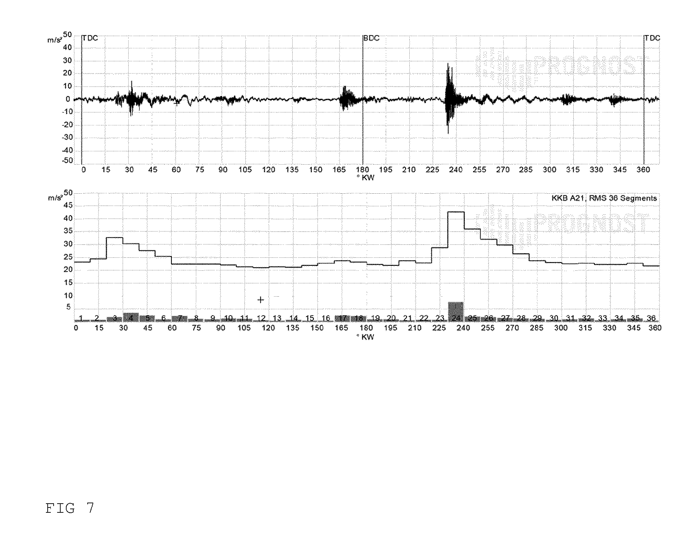

FIG 7 zeigt dazu ein Beispiel. In der oberen Darstellung ist ein an einem Kolbenkompressor aufgenommener Messwert gezeigt, der über verschiedene Rotationslagen - in Grad Kurbelwinkel (°KW); TDC und BDC bedeuten top dead center (oberer Totpunkt) und bottom dead center (unterer Totpunkt) - aufgetragen ist. In der unteren Darstellung ist eine Segmentierung der Auswertung des Messwertes durch eine Überwachungseinrichtung 74 gezeigt. Der treppenförmige Verlauf stellt dabei unterschiedliche Grenzwerte über eine Vollumdrehung der Kurbelwelle dar. Die in jedem Segement eingezeichneten Balken stellen eine Auswertung des Messwerts in dem jeweiligen Segement dar, hier als Effektivwerte (quadratische Mittelwerte; RMS - root mean square) gezeigt. Eine Überschreitung eines segmentspezifischen Grenzwerts durch eine solche oder ähnliche Auswertung des Verlaufs des Messwerts im jeweiligen Segment muss von der Überwachungseinrichtung 74 erkannt werden und kann unmittelbar oder nach einer mehrfachen Verletzung desselben Grenzwerts über eine Mehrzahl von aufeinander folgenden Zyklen oder im Zusammenhang mit anderen Prozesszuständen auf eine Ausnahmesituation hindeuten.

Bei einer Ausführungsform der Simulationseinrichtung 10 ist eine segmentspezifische Generierung/Erzeugung von Basis- und Ausgangssignalen 20, 12 möglich, das heisst, dass für jedes Segment eine Parametrierung der Basis- und Ausgangssignale nach Signalform, Frequenz, Amplitude, Offset und dergleichen möglich ist, um zum Beispiel - wie dies in FIG 7 für einen realen Messwert gezeigt ist - in der Nähe von 240 °KW ein hochfrequentes Ausgangssignal 12 mit einer hohen Amplitude zu erzeugen. Je nach Frequenz und Amplitude eines solchen Ausgangssignals 12 überschreitet eine durch die Überwachungseinrichtung 74 vorgenommene Auswertung des von der Simulationseinrichtung 10 erzeugten Ausgangssignals den in der Überwachungseinrichtung 74 vorgesehenen, segmentspezifischen Grenzwert, so dass eine in der Überwachungseinrichtung 74 angelegte Behandlung einer solchen Situation, zum Beispiel ein Abschaltvorgang, ausgelöst wird. Eine solche segmentspezifische Vorgabe der Basis-und Ausgangssignale 20, 12 ist auch eine Form einer Beeinflussung einer Phasenlage der vom Signalgenerierungsmittel 16 generierten Basissignale 20, denn der Start- und Endpunkt eines jeweiligen Segments ist durch den Kurbelwellenwinkel vorgegeben und damit durch eine Phasenlage zu einem zum Beispiel im oberen Totpunkt der Kurbelwelle aufgenommenen (oder generierten) Triggersignal bestimmt.

Bei einer Ausführungsform der Simulationseinrichtung 10 erfolgt die Generierung/Erzeugung von segmentierten Basis- und Ausgangssignalen 20, 12 in Bezug auf zumindest eine erste und eine zweite vorgebbare Amplitude. Die erste Amplitude ist dabei normalerweise so gewählt, dass ein in der Überwachungseinrichtung für den jeweiligen Messwert angelegter Grenz- oder Schwellwert nicht oder gerade nicht überschritten wird. Die zweite Amplitude ist dann entsprechend so gewählt, dass ein in der Überwachungseinrichtung für den jeweiligen Messwert angelegter Grenz- oder Schwellwert überschritten oder gerade überschritten wird. Solche Amplitudenwerte sind entweder für das oder jedes jeweilige Basis- / Ausgangssignal 20, 12 insgesamt oder für jedes Segment eines segmentierten Basis- / Ausgangssignals 20, 12 vorgebbar. Damit kann also mit einer Verwendung der ersten Amplitude eine Gut-Situation und mit Verwendung einer weiteren Amplitude eine Ausnahmesituation simuliert werden. Eine Umschaltung zwischen einer ersten Amplitude und mindestens einer weiteren Amplitude kann dabei durch die Simulationseinrichtung 10 auch automatisch erfolgen, zum Beispiel indem die erste Amplitude während eines vorgegebenen oder vorgebbaren ersten Zeitraums und im Anschluss daran für einen vorgegebenen oder vorgebbaren zweiten Zeitraum die zweite Amplitude verwendet wird. Solche Zeiträume lassen sich in Form von Zeitwerten, aber zum Beispiel auch in Form einer Anzahl von Zyklen des jeweiligen technischen Prozesses ausdrücken.

Bei einer weiteren Ausführungsform des Simulationseinrichtung 10 liest diese über eine geeignete kommunikative Verbindung zur jeweiligen Überwachungseinrichtung 74 aus dieser dort angelegte Grenz- oder Schwellwerte aus. Auf Basis dieser Informationen kann zumindest die oben erwähnte erste und zweite Amplitude eines Ausgangssignals 12 auch automatisch festgelegt werden, zum Beispiel indem die erste Amplitude 3% oder 5% unterhalb des jeweiligen Grenz- oder Schwellwerts verbleibt und indem die zweite Amplitude diesen um zum Beispiel 3% oder 5% überschreitet. Bei einer in der Überwachungseinrichtung 74 angelegten Mehrzahl von Grenz- oder Schwellwerten für einen Messwert führt dies zu einer entsprechenden Mehrzahl von in der Simulationseinrichtung 10 automatisch erzeugten Amplituden. Die Simulationseinrichtung 10 ist damit in der Lage, aus der jeweiligen Überwachungseinrichtung 74 selbsttätig Daten für ein Simulationsszenario zu laden und darauf basierend in einer besonderen Ausführungsform auch in der Lage, ein Simulationsszenario selbsttätig zu generieren, zum Beispiel in Form einer zeitlichen Abfolge erzeugter Ausgangssignale 12, die zunächst unterhalb vorgegebener Grenzwerte bleiben und dann für eine vorgegebene Dauer oder eine vorgegebene Anzahl von Zyklen solche Grenzwerte überschreiten.

Einzelne im Vordergrund stehende Aspekte der hier eingereichten Beschreibung lassen sich damit kurz wie folgt zusammenfassen: Zuvorderst wird eine Simulationseinrichtung 10 zur Erzeugung von zumindest einem Ausgangssignal 12 an zumindest einem Ausgangskanal 14 zur Simulation eines Sensors eines vorgebbaren Typs angegeben, wobei die Simulationseinrichtung 10 einerseits Signalgenerierungsmittel 16 zur Generierung zumindest eines Basissignals 20 und andererseits Signalbearbeitungsmittel 18 zur Verarbeitung des vom dem oder jedem Signalgenerierungsmittel 16 generierbaren Basissignals 20 und zur Erzeugung des zumindest einen Ausgangssignals 12 umfasst und wobei durch das oder jedes Signalbearbeitungsmittel 18 das vom Signalgenerierungsmittel 16 empfangbare Basissignal 20 in ein Ausgangssignal 12 in Form einer physikalischen Größe umwandelbar ist, wie dies ein physikalischer Sensor generieren würde. Sodann wird eine Simulationseinrichtung der oben skizzierten Art angegeben, die eine Mehrzahl von Ausgangskanälen 14 aufweist, wobei für jeden Ausgangskanal 14 das darüber ausgebbare Ausgangssignal 12 einzeln durch jeweils ein vom Signalgenerierungsmittel 16 generierbares Basissignal 20 bestimmbar ist und wobei eine Phasenlage der vom Signalgenerierungsmittel 16 generierbaren Basissignale 20 beeinflussbar ist. Entsprechend werden auch ein Verfahren zum Betrieb einer solchen Simulationseinrichtung 10 angegeben, wobei die Simulationseinrichtung 10 zur Simulation eines Sensors eines vorgebbaren Typs an zumindest einem Ausgangskanal 14 zumindest ein Ausgangssignal 12 erzeugt, wobei die Simulationseinrichtung 10 einerseits Signalgenerierungsmittel 16 zur Signalerzeugung und andererseits Signalbearbeitungsmittel 18 zur Verarbeitung eines vom dem oder jedem Signalgenerierungsmittel 16 generierten Basissignals 20 und zur Erzeugung des zumindest einen Ausgangssignals 12 umfasst und wobei das oder jedes Signalbearbeitungsmittel 18 das vom Signalgenerierungsmittel 16 empfangene Basissignal 20 in ein Ausgangssignal 12 in Form einer physikalischen Größe umwandelt, wie dies ein physikalischer Sensor generieren würde, sowie ein Verfahren zum Betrieb einer Simulationseinrichtung 10 mit einer Mehrzahl von Ausgangskanälen 14, wobei für jeden Ausgangskanal 14 das darüber ausgegebene Ausgangssignal 12 einzeln durch jeweils ein vom Signalgenerierungsmittel 16 generiertes Basissignal 20 bestimmt wird und wobei eine Phasenlage der vom Signalgenerierungsmittel 16 generierten Basissignale 20 vorgegeben wird.

Insgesamt werden damit eine Simulationseinrichtung 10, ein Verfahren zum Betrieb einer Simulationseinrichtung 10 sowie eine Verwendung einer Simulationseinrichtung 10 und eines Verfahrens zum Betrieb einer Simulationseinrichtung 10 angegeben, wobei sich die Simulationseinrichtung 10 dadurch auszeichnet, dass mit einer durch eine umfangreiche Parametrierbarkeit erreichten hohen Flexibilität an zumindest einem Ausgangskanal 14 ein in seiner Phasenlage beeinflussbares Ausgangssignal 12 erzeugt werden kann, so dass mit der Simulationseinrichtung 10 eine Überwachungseinrichtung 74 geprüft werden kann, der ein oder mehrere derartige Ausgangssignale 12 anstelle normalerweise aus einem überwachten technischen Prozess 70 aufgenommener Messwerte zugeführt werden.

### Bezugszeichenliste

- 10: Simulationseinrichtung
- 12: Ausgangssignal
- 14: Ausgangskanal
- 16: Signalgenerierungsmittel
- 18: Signalbearbeitungsmittel
- 20: Basissignal
- 22: Digital/Analog-Konverter
- 24: Spannungsversorgungseinheit
- 26: Versorgungsspannungseingang
- 28: Schalteinrichtung
- 30: Ein/Aus-Schalter
- 32: Schnittstelleneinheit
- 34: Eingangsschnittstelle
- 36: Akkumulator
- 38: Betriebsspannungsüberwachung
- 40-46: Funktionseinheit
- 48: Selektionsschaltelement
- 50: Auswahlsignal
- 52: Verbindungskabel
- 54: Bediengerät
- 56, 57: Eingabemittel (Tasten, Trackball)
- 58: Anzeigemittel (Bildschrim)
- 60: Benutzeroberfläche
- 62, 63: Schaltfläche
- 64: Sensorart
- 65: Signaltyp
- 66, 67: Auswahlfeld
- 68: Umschaltfeld
- 70: technischer Prozess
- 72: Sensorik
- 74: Überwachungseinrichtung
- 76: Aktorik

## Patentansprüche

1. Simulationseinrichtung (10) zur Erzeugung einer Mehrzahl von Ausgangssignalen (12) an einer Mehrzahl von Ausgangskanälen (14) zur Simulation eines Sensors eines vorgebbaren Typs oder mehrerer Sensoren eines jeweils vorgegebenen Typs,
wobei die Simulationseinrichtung (10) einerseits Signalgenerierungsmittel (16) zur Generierung zumindest eines Basissignals (20) und andererseits Signalbearbeitungsmittel (18) zur Verarbeitung des vom dem oder jedem Signalgenerierungsmittel (16) generierbaren Basissignals (20) und zur Erzeugung jeweils eines Ausgangssignals (12) umfasst,
wobei für jeden Ausgangskanal (14) das darüber ausgebbare Ausgangssignal (12) einzeln durch jeweils ein vom Signalgenerierungsmittel (16) generierbares Basissignal (20) bestimmbar und eine Phasenlage der vom Signalgenerierungsmittel (16) generierbaren Basissignale (20) beeinflussbar ist und
wobei durch das oder jedes Signalbearbeitungsmittel (18) das vom Signalgenerierungsmittel (16) empfangbare Basissignal (20) in ein Ausgangssignal (12) in Form einer physikalischen Größe umwandelbar ist, wie dies ein physikalischer Sensor generieren würde.

2. Simulationseinrichtung nach Anspruch 1, mit einer Mehrzahl von Ausgangskanälen (14), wobei für zumindest einen Ausgangskanal (14) die Art der Umwandlung des vom Signalgenerierungsmittel (16) empfangbaren Basissignals (20) in ein Ausgangssignal (12) auswählbar ist.

3. Simulationseinrichtung nach Anspruch 2, wobei jedem Ausgangskanal (14) ein Signalbearbeitungsmittel (18) zugeordnet ist und wobei zumindest eines der Signalbearbeitungsmittel (18) zur Auswahl der Art der Umwandlung des vom Signalgenerierungsmittel (16) empfangbaren Basissignals (20) in ein Ausgangssignal (12) parametrierbar ist.

4. Simulationseinrichtung nach einem der vorangehenden Ansprüche, mit einem Triggerausgang (14).

5. Simulationseinrichtung nach einem der vorangehenden Ansprüche, wobei das Signalgenerierungsmittel (16) zumindest zur Beeinflussung des jeweils als Grundlage für das oder jedes Ausgangssignal (12) generierbaren Basissignals (20) parametrierbar ist, insbesondere zur Beeinflussung des jeweils als Grundlage für das oder jedes Ausgangssignal (12) generierbaren Basissignals (20) und zur Auswahl der Art der Umwandlung des vom Signalgenerierungsmittel (16) empfangbaren Basissignals (20) in ein Ausgangssignal (12) für zumindest einen Ausgangskanal (14) parametrierbar ist

6. Simulationseinrichtung nach Anspruch 5, mit einer Eingangsschnittstelle (34) zum Anschluss eines Geräts zur Parametrierung des Signalgenerierungsmittels (16).

7. Bediengerät (54) für eine Simulationseinrichtung (10) nach Anspruch 6 oder System mit einer Simulationseinrichtung (10) nach Anspruch 6 und einem solchen Bediengerät (54), wobei das Bediengerät (54) eine Benutzeroberfläche (60) zur Parametrierung des vom Signalgenerierungsmittel (16) der Simulationseinrichtung (10) generierbaren Basissignals (20) oder der vom Signalgenerierungsmittel (16) der Simulationseinrichtung (10) generierbaren Basissignale (20) umfasst.

8. Bediengerät (54) oder System nach Anspruch 7, wobei das Bediengerät (54) eine Benutzeroberfläche (60) zur Parametrierung der Art der Umwandlung des oder der vom Signalgenerierungsmittel (16) empfangbaren Basissignals (20) bzw. Basissignale (20) in ein Ausgangssignal (12) für zumindest einen Ausgangskanal (14) umfasst.

9. Bediengerät (54) oder System nach Anspruch 7 oder 8, wobei das Bediengerät (54) eine Anzeigevorrichtung (58) zur graphischen Darstellung der Benutzeroberfläche (60) und zur graphischen Darstellung des oder der entsprechend der Parametrierung vom Signalgenerierungsmittel (16) generierten Basissignals (20) bzw. Basissignale (20) aufweist.

10. Verfahren zum Betrieb einer Simulationseinrichtung (10) mit einer Mehrzahl von Ausgangskanälen (14) nach einem der Ansprüche 1 bis 6, wobei die Simulationseinrichtung (10) zur Simulation jeweils eines Sensors eines vorgebbaren Typs an jeweils einem Ausgangskanal (14) zumindest ein Ausgangssignal (12) erzeugt,
wobei die Simulationseinrichtung (10) einerseits Signalgenerierungsmittel (16) zur Signalerzeugung und andererseits Signalbearbeitungsmittel (18) zur Verarbeitung eines vom dem oder jedem Signalgenerierungsmittel (16) generierten Basissignals (20) und zur Erzeugung zumindest eines Ausgangssignals (12) umfasst,
wobei für jeden Ausgangskanal (14) das darüber ausgegebene Ausgangssignal (12) einzeln durch jeweils ein vom Signalgenerierungsmittel (16) generiertes Basissignal (20) bestimmt wird und wobei eine Phasenlage der vom Signalgenerierungsmittel (16) generierten Basissignale (20) vorgegeben wird und
wobei das oder jedes Signalbearbeitungsmittel (18) das vom Signalgenerierungsmittel (16) empfangene Basissignal (20) in ein Ausgangssignal (12) in Form einer physikalischen Größe umwandelt, wie dies ein physikalischer Sensor generieren würde.

11. Verfahren nach Anspruch 10 zum Betrieb einer Simulationseinrichtung (10) mit einer Mehrzahl von Ausgangskanälen (14), wobei jedem Ausgangskanal (14) ein Signalbearbeitungsmittel (18) zugeordnet ist und wobei zumindest eines der Signalbearbeitungsmittel (18) zur Auswahl der Art der Umwandlung des vom Signalgenerierungsmittel (16) empfangenen Basissignals (20) in ein Ausgangssignal (12) parametriert wird.

12. Verfahren nach einem der Ansprüche 10 oder 11 zum Betrieb einer Simulationseinrichtung (10) in Kombination mit einem Bediengerät (54) nach einem der Ansprüche 8 bis 10, wobei mittels einer Benutzeroberfläche (60) des Bediengeräts (54) eine Parametrierung des oder der vom Signalgenerierungsmittel (16) der Simulationseinrichtung (10) generierten Basissignals (20) bzw. Basissignale (20) erfolgt, insbesondere bei einer Mehrzahl von generierten Basissignalen (20) deren Parametrierung und eine Festlegung einer Phasenlage.

13. Verfahren nach Anspruch 12, wobei mittels der Benutzeroberfläche (60) eine Parametrierung der Art der Umwandlung des oder der vom Signalgenerierungsmittel (16) empfangenen Basissignals (20) bzw. Basissignale (20) in ein Ausgangssignal (12) für zumindest einen Ausgangskanal (14) erfolgt.

14. Verwendung einer Simulationseinrichtung (10) nach einem der Ansprüche 1 bis 6 oder Verwendung eines Verfahrens nach einem der Ansprüche 10 bis 13 zum Funktionstest oder zur Zertifizierung einer Einrichtung zur Überwachung eines technischen Prozesses.

15. Verwendung einer Simulationseinrichtung (10) nach einem der Ansprüche 1 bis 6 oder Verwendung eines Verfahrens nach einem der Ansprüche 10 bis 13 zum Funktionstest oder zur Zertifizierung einer Einrichtung zur Überwachung eines Kolbenkompressors oder einer Einrichtung zur gleichzeitigen Überwachung einer Mehrzahl von Kolbenkompressoren.
